# EUROPEAN PATENT SPECIFICATION

(11) **EP 4 229 833 B1**
(45) Date of publication and mention of the grant of the patent: **02.12.2026**
(21) Application number: 21807352.6
(22) Date of filing: 11.10.2021
(51) Int. Cl.: H04L 12/18

(54) **SYSTEM AND METHODS FOR PROVIDING CONFERENCE APPLICATIONS DURING A NETWORK CONFERENCE**
SYSTEM UND VERFAHREN ZUR BEREITSTELLUNG VON KONFERENZANWENDUNGEN WÄHREND EINER NETZWERKKONFERENZ
SYSTÈME ET PROCÉDÉS DE FOURNITURE D'APPLICATIONS DE CONFÉRENCE PENDANT UNE CONFÉRENCE EN RÉSEAU

(30) Priority: 13.10.2020 US 202017069620
(43) Date of publication of application: 23.08.2023
(73) Proprietor: Zoom Communications, Inc., San Jose, CA 95113 (US)
(72) Inventor: MAYFIELD, Ross, Douglas, San Jose, CA 95113 (US); TAKEBUCHI, Yoshifumi, San Jose, CA 95113 (US)
(74) Representative: Slingsby Partners LLP
(86) International application number: PCT/US2021/054350
(87) International publication number: WO 2022/081447

(56) References cited:
- US-A1- 2007 121 530
- US-A1- 2007 300 165
- US-A1- 2014 173 430
- US-A1- 2014 289 646

## Description

### CROSS REFERENCE TO RELATED APPLICATIONS

This application claims priority to U.S. Patent Application No. 17/069,620, filed October 13, 2020, titled "Systems And Methods For Providing Conference Applications During A Network Conference".

### FIELD

The exemplary embodiments of the present invention relate to the field of network communication. More specifically, the exemplary embodiments of the present invention relate to conference system with application support.

### BACKGROUND

With the increasing popularity of digital electronics and network communications, real-time interactive network conferences (or meetings) have become more popular. For example, network conferencing now allows people to communicate with each other from remote locations to exchange audio and video in real time.

During a network conference, each meeting attendee can transmit video and audio signals to other attendees. A typical conferencing system is configured with a camera that captures an image of a conference attendee and transmits this image to other attendees. Typically, attendee are limited to using functionality provided by the conferencing system. For example, the conferencing system may provide a chat mode in which conference attendees can chat by exchanging text messages during a conference. However, it is desirable to provide greater functionality during a network conference to conference attendees to increase productivity and enhance user experience.
US patent application US2014/289646 A1 describes a cross-platform conferencing interface including a graphical user interface that displays multiple conferencing options, including a web conferencing option. A user can connect a web conference call through one of multiple web conference applications, or providers. The application user interface can be implemented as a dedicated conferencing device that provides video conferencing, audio conferencing, web conferencing, and an interactive whiteboard.
US patent application US2007/300165 A1 describes providing breakout rooms, or smaller sub-sets of a larger meeting, with full collaboration capabilities in live web-based conferencing applications. This document describes the ability to assign individuals to breakout rooms and providing a seamless experience in joining into breakout rooms with audio provisioning.
US patent application US2014/173430 A1 describes a method for sharing media within a chat room system, including, in response to receipt of a sharing selection from a user at a device, rerouting an audio output from a default audio output of the device to a virtual audio output, capturing a primary audio stream generated by an application executed on the device with the virtual audio output, sending the primary audio stream to an external server for distribution to secondary user devices, receiving a secondary audio stream from the external server and concurrently playing the primary audio stream and secondary audio stream at an audio output of the device.
US patent application US2007/121530 A1 describes conferencing systems and methods for managing a conference spanning system to facilitate participation in a plurality of conferences at the same time. The system is described as optionally including (i) a plurality of conferences, each conference being configured to support a plurality of media modes; (ii) a presentation mechanism configured to support the plurality of media modes from the plurality of conferences; and (iii) a selector for selecting a conference from the plurality of conferences and designating the selected conference as an active conference and designating non-selected conferences as background conferences, wherein the active conference is assigned at least one enhanced media mode in the presentation mechanism.

### SUMMARY

According to the invention, a conference system with application support (CSAS) is provided. In an embodiment, the CSAS utilizes a client application that allows conference attendees to exchange audio and video information over a communication network. The client application is configured to install and run conference applications that provide a wide range of functionality to the conference attendees. The conference applications can be proprietary to the conference system or produced by third parties. During operation, an attendee can run a conference application to provide a variety of functionality before, during, and after a network conference. The invention is as defined in the appended set of claims.

According to claim 1, a method is disclosed that provide a conference application during a network conference. The method comprises participating in a network conference using a client application, selecting a conference application from a plurality of conference applications, running the conference application from the client application during the network conference. The method also comprises displaying an application user interface generated by the conference application during the network conference.

According to claim 8, an apparatus is disclosed for providing a conference application during a network conference. The apparatus comprises a processor configured to: run a client application to participate in a network conference; select a conference application from a plurality of conference applications; and run the conference application from the client application during the network conference. The apparatus also comprises a display interface that displays an application user interface generated by the conference application during the network conference.

According to claim 14, a non-transitory computer readable medium is provided on which are stored program instructions that, when executed by one or more processors, cause the one or more processors to perform operations of: participating in a network conference using a client application; selecting a conference application from a plurality of conference applications; running the conference application from the client application during the network conference; and displaying an application user interface generated by the conference application during the network conference.

Additional features and benefits of the exemplary embodiments of the present invention will become apparent from the detailed description, figures and claims set forth below.

### BRIEF DESCRIPTION OF THE DRAWINGS

The exemplary embodiments of the present invention will be understood more fully from the detailed description given below and from the accompanying drawings of various embodiments of the invention, which, however, should not be taken to limit the invention to the specific embodiments, but are for explanation and understanding only.
**FIG. 1** shows a diagram illustrating an exemplary embodiment of a conference system with application support.
**FIG. 2** shows exemplary functions provided by embodiments of a conference system with application support.
**FIG. 3** shows an exemplary embodiment of a CSAS client configured to provide embodiments of the conference system with application support.
**FIG. 4** shows an exemplary host apparatus configured to provide embodiments of the conference system with application support.
**FIG. 5** shows an exemplary conference server configured to provide embodiments of the conference system with application support.
**FIG. 6** shows an exemplary attendee apparatus configured to provide embodiments of the conference system with application support.
**FIG. 7** shows a diagram illustrating an exemplary embodiment of a conference system with application support in which an application is run during a network conference.
**FIG. 8** shows an exemplary method for running an application during a network conference.
**FIG. 9** a diagram illustrating an exemplary embodiment of a conference system with application support in which an application screen shot is shared during a network conference.
**FIG. 10** shows an exemplary method for sharing an application screen during a network conference.
**FIG. 11** shows a diagram illustrating an exemplary embodiment of a conference system with application support in which application content is transmitted during a conference to another attendee.
**FIG. 12** shows an exemplary method for transmitting application content during a network conference.
**FIG. 13** a diagram illustrating an exemplary embodiment of a conference system with application support in which applications are run before and after a network conference.
**FIG. 14** shows an exemplary method for running applications before and after a network conference.
**FIG. 15** a diagram illustrating an exemplary embodiment of a conference system with application support in which application content is attached to an instance of a network conference.
**FIG. 16** shows an exemplary method for attaching application content to an instance of a network conference.
**FIG. 17** shows a diagram illustrating an exemplary embodiment of a conference system with application support in which a record of application usage during a network conference is maintained.
**FIG. 18** shows an exemplary method for maintaining records of application usage during a network conference.

### DETAILED DESCRIPTION

Embodiments of the present invention disclose systems, methods, and apparatus for providing a network conference system with application support.

The purpose of the following detailed description is to provide an understanding of one or more embodiments of the present invention. Those of ordinary skills in the art will realize that the following detailed description is illustrative only and is not intended to be in any way limiting. Other embodiments will readily suggest themselves to such skilled persons having the benefit of this disclosure and/or description.

In the interest of clarity, not all of the routine features of the implementations described herein are shown and described. It will, of course, be understood that in the development of any such actual implementation, numerous implementation-specific decisions may be made in order to achieve the developer's specific goals, such as compliance with application and business related constraints, and that these specific goals will vary from one implementation to another and from one developer to another. Moreover, it will be understood that such a development effort might be complex and time-consuming but would nevertheless be a routine undertaking of engineering for those of ordinary skills in the art having the benefit of embodiments of this disclosure.

Various embodiments of the present invention illustrated in the drawings may not be drawn to scale. Rather, the dimensions of the various features may be expanded or reduced for clarity. In addition, some of the drawings may be simplified for clarity. Thus, the drawings may not depict all of the components of a given apparatus (e.g., device) or method. The same reference indicators will be used throughout the drawings and the following detailed description to refer to the same or like parts.

In accordance with the embodiments of present invention, the components, process steps, and/or data structures described herein may be implemented using various types of operating systems, computing platforms, computer programs, and/or general-purpose machines. In addition, those of ordinary skills in the art will recognize that devices of a less general-purpose nature, such as hardware devices, field programmable gate arrays (FPGAs), application specific integrated circuits (ASICs), or the like, may also be used without departing from the scope and spirit of the inventive concepts disclosed herein. Where a method comprising a series of process steps is implemented by a computer or a machine and those process steps can be stored as a series of instructions readable by the machine or computer for execution. The instructions may be stored on a tangible medium such as a computer memory device, such as, but not limited to, magnetoresistive random access memory ("MRAM"), phase-change memory, or ferroelectric RAM ("FeRAM"), flash memory, ROM (Read Only Memory), PROM (Programmable Read Only Memory), EEPROM (Electrically Erasable Programmable Read Only Memory), Jump Drive, magnetic storage medium (e.g., tape, magnetic disk drive, and the like), optical storage medium (e.g., CD-ROM, DVD-ROM, paper card and paper tape, and the like) and other known types of program memory.

The term "system" or "device" is used generically herein to describe any number of components, elements, sub-systems, devices, packet switch elements, packet switches, access switches, routers, networks, computer and/or communication devices or mechanisms, or combinations of components thereof. The term "computer" includes a processor, memory, and buses capable of executing instruction wherein the computer refers to one or a cluster of computers, personal computers, workstations, mainframes, or combinations of computers thereof.

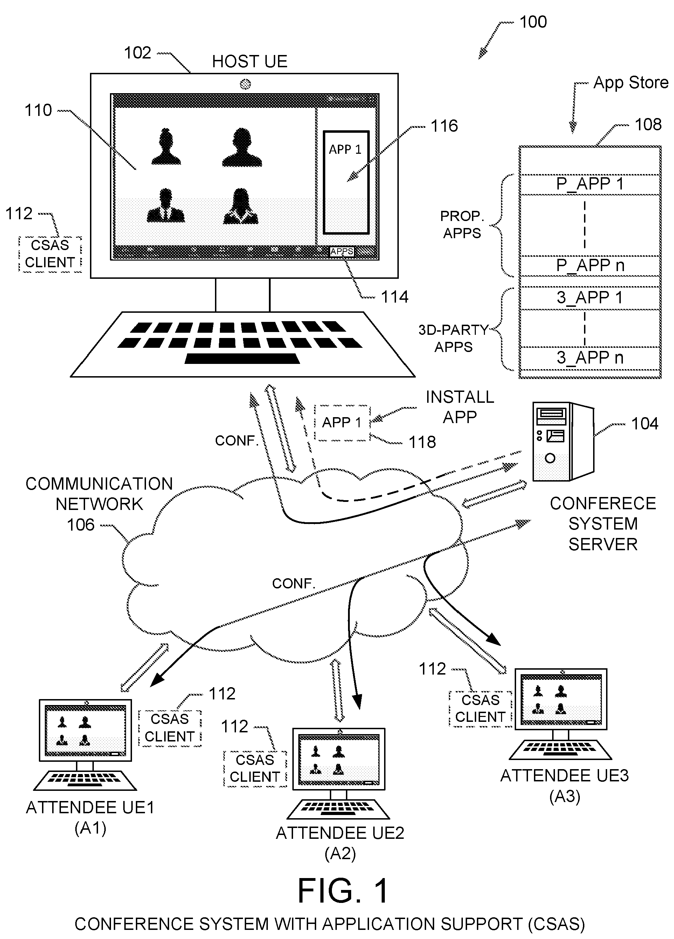

**FIG. 1** shows a diagram of a communication network **100** that illustrates an exemplary embodiment of a conference system with application support (CSAS). The communication network **100** comprises first user equipment **102,** which is referred to as a host UE that acts as a host for the network conference. The network **100** also comprises attendee user equipment (A1-A3) that participant in the network conference. The conference participants (e.g., host **102** and attendees (A1-A3)) are configured to communicate with each other utilizing a conference system server **104** and communication network **106.** In an embodiment, the conference server **104** stores a plurality of conference applications **108** as part of a conference application store (App store). The applications **108** comprises proprietary and third-party applications that can be purchased or licensed for use during a network conference. In an embodiment, the communication network **106** comprises a wired communication network, a wireless communication network, or a combination of wired and wireless communication networks.

The host **102** and attendee UE (A1-A3) run a CSAS client **112** that provides the function of a conference system with application support as described herein. During a conference, the host **102** and attendees (A1-A3) communicate with each other through the system server **104** and communication network **106.** The CSAS client **112** provides a conference display **110** in which the conference participants can see each other's video streams on their own system.

In an embodiment, the user of the host **102** can select an application selector (or button) **114** on the display **110** that will open a directory of conference applications that are installed on the host **102.** In another embodiment, the user of the host **102** can access the application store **108** and install any of the available applications. For example, the application **118** can be obtained from the application store **108** and installed on the host **102.** The user then selects one or more applications to run, and the selected applications open dialog windows that appear in a right sidebar of the display. For example, the application **116** has been selected and runs during the conference. The user can then interact with the application **116** during the conference to perform functions, such as note taking, document creation, spreadsheet operations, or any other functions provided by the application **116.** The use of applications during a network conference provides greater functionality during a network conference by allowing conference attendees to increase productivity and by providing an enhanced user experience.

A more detailed description of the CSAS to provide applications for use before, during, and after a network conference is provided below.

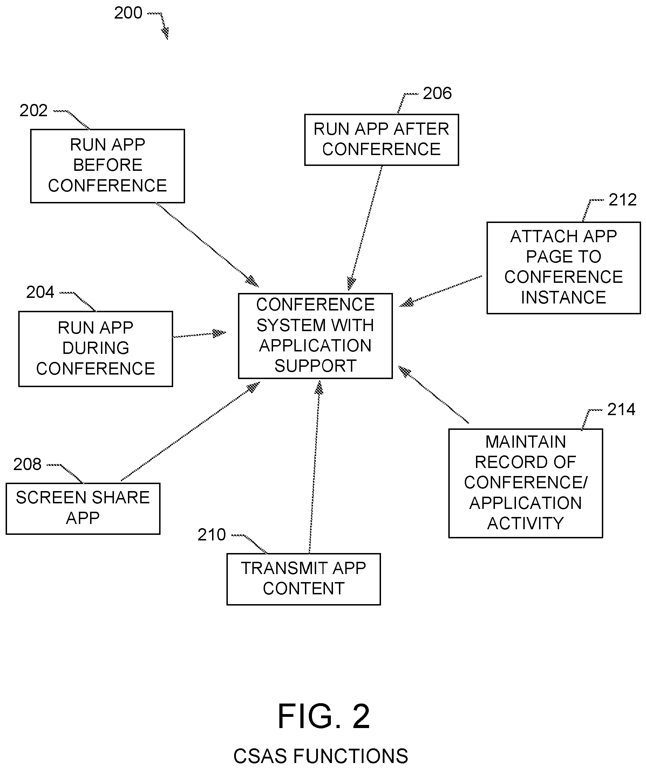

**FIG. 2** shows exemplary functions 200 provided by embodiments of the conference system with application support. For example the functions **200** are available to attendees using the conference system with application support as shown in **FIG 1****.** In various exemplary embodiments, the conference system with application support provides one or more of the following application functions.

Run Applications before a Conference (**202**) - This function allows an application to be run from the conference system client before a network conference is started or joined. For example, a user may start a main module of the conference system client and then select from installed conference applications and run any of those installed conference application. The user may also download and install additional conference applications from the conference system server and then run any of those newly install applications from the conference system client. Thus, the user can interact with the running conference applications as desired before a network conference is started.

Run Applications During a Conference **204** - This function allows an application to be run from the conference system client during a network conference. For example, a user may start or join a network conference and then select from installed conference applications and run any of those installed conference applications. The user may also download and install additional conference applications from the conference system server and then run any of those newly install applications during the network conference. Thus, the user can interact with the running conference applications as desired during a network conference.

Run Applications After a Conference **206** - This function allows an application to be run from the conference system client after a network conference has completed. For example, a user may exit a network conference and then select from installed conference applications and run any of those installed conference application. The user may also download and install additional conference applications from the conference system server and then run any of those newly install applications during the network conference. Thus, the user can interact with the running conference applications as desired after a network conference has been exited.

Provide Screen Share of Application **208** - This function allows a screen share of a conference application that is run from the conference system client. For example, a user may start or join a network conference and then select from installed conference applications and run any of those installed conference applications. When running, the application generates an application display window that appears on the user's screen. With a single button press or keystroke the user can screen share the application display window with other conference attendees. For example, the user may run a conference application that generate a display window showing time schedule of events and then share this display window of the time schedule with other conference attendees by pressing one button or key. Thus, the user can interact with the running conference applications as desired and screen share the results during a network conference.

Transmit Application Content During Conference **210** - This function allows content from a conference application to be transmitted to attendees of network conference. For example, a user may start or join a network conference and then select from installed conference applications and run any of those installed conference applications. When running, the application generates an application display window that appears on the user's screen. The application display window shows application content (or content pages) that contain various content that has been entered by the user or has been generated by the application. The user can select any of the application content and transmit this content to attendees of the network conference. The application content is transmitted with an identifier that identifies the conference application associate with the content. When the transmitted content is received at an attendee device, the CSAS client uses the application identifier to select and run the application with the transmitted content on the attendee device. If the attendee device does not have the application installed, the application identifier is used to download and install the application on the attendee device to allow the content to be viewed. Thus, the user can interact with the running conference applications as desired and transmit application content to other attendees during a network conference.

Attach Application Page to Conference **212** - This function allows a conference application page (or content) to be attached (or associated) with an instance of a network conference. For example, a user may identify a conference application page and form an attachment to an instance of a network conference. The attachment can occur before, during, or after the identified network conference occurs. For example, if the attachment of the page occurs before the conference is started, when a conference invitation is transmitted to the conference attendees, the attached application page is included with the invitation. This allows the attendees to open and view the page using the appropriate application before the conference begins.

Generate Record of Application Activity **214** - This function allows a record of conference application activity to be maintained and saved. For example, a user may start or join a network conference and then select from installed conference applications and run any of those conference applications during the conference. After the conference has ended, a record of the applications that were run during the conference is saved on the user's device.

More detail descriptions of the functions provided by embodiments of the conference system with application support are provided in greater detail below.

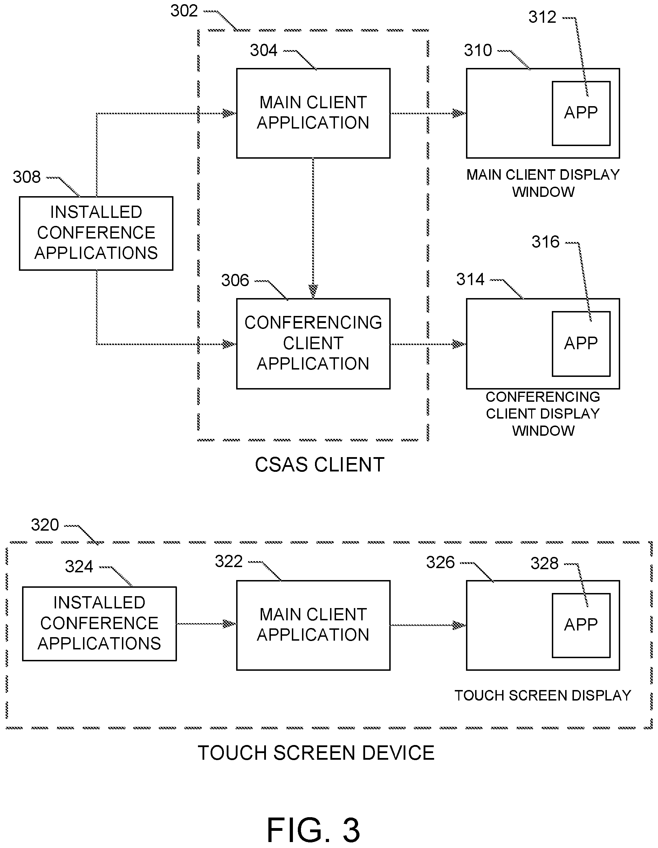

**FIG. 3** shows an exemplary embodiment of a CSAS client **302** configured to provide embodiments of the conference system with application support. For example, the CSAS client **302** is suitable for use at the CSAS client **112.** In an embodiment, the CSAS client **302** comprises a main client application **304** and a conferencing client application **306.** When running, the main client application **304** provides a main client display window **310** in which a user interacts to setup, initiate, or join a network conference. In an embodiment, installed conference applications **308** can be accessed and run by the main client application **304** to generate a conference application interface window **312** that appears in the main client display window **310.** The user can then interact with the conference application interface window **312** to perform a variety of functions provided by the application.

The main client application can also run a conferencing client application **306.** When running, the conferencing client application **306** provides a conferencing client display window **314** in which a user interacts to participate in a network conference. In an embodiment, the installed conference applications **308** can be accessed and run by the conferencing client application **304** during a network conference to generate a conference application interface window **316** that appears in the conferencing client display window **314.** The user can then interact with the conference application interface window **316** to perform a variety of functions provided by the application.

In an embodiment, the main client application **304** and the conferencing client application **306** comprise an embodiment of a Web browser and the conference applications **308** comprise an embodiment of Web applications that are configured to run in the Web browser. However, other configurations for running the conference applications **308** in the main **304** and conferencing **306** client applications can be utilized.

In still another embodiment, a standalone device, such as the touch screen device **320** is provided that includes a main client application **322** and installed conference applications **324.** The main client application **322** can run any of the installed conference applications **324** on a touch screen display **326** to generate a conference application interface window **328** that can provide user interaction through the touch screen **326.**

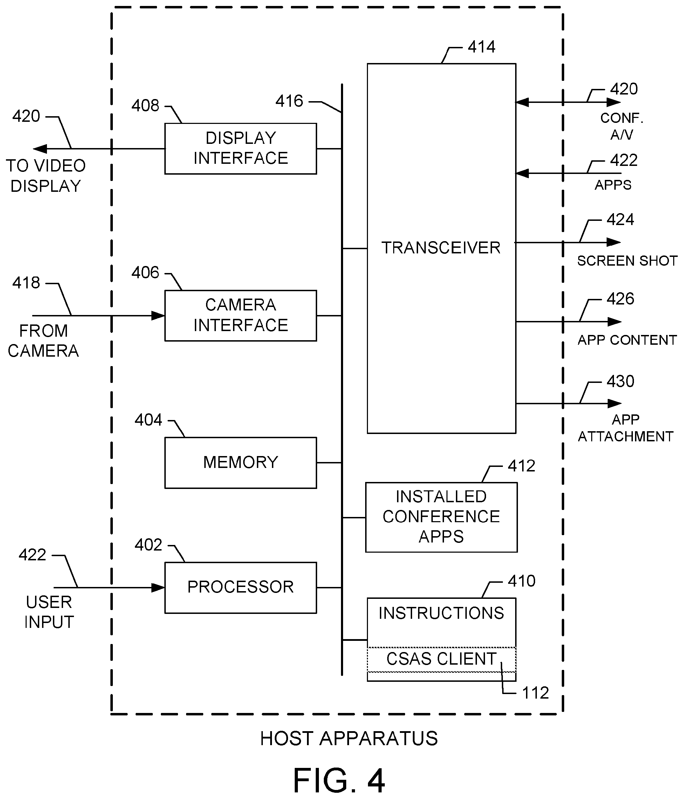

**FIG. 4** shows an exemplary host apparatus **400** configured to provide embodiments of the conference system with application support. For example, the host apparatus **400** is suitable for use as the host UE **102** shown in **FIG. 1****.** The host apparatus **400** comprises processor **402,** memory **404,** camera interface **406,** display interface **408,** instructions **410,** installed conference applications **412,** and transceiver **414** all connected to communicate over data bus **416.** In an embodiment, the instructions **410** comprise the conference system with application support client **112.**

During operation, the processor **402** executes the instructions **410** to enable the client **112** to perform the functions and operations of the CSAS. For example, the processor **402** controls the camera interface **406** to receive a video signal **418** from a camera mounted at the user equipment. The video signal contains an image of the host user. The display interface **408** is configured to output display information **420** to a video display that is part of the host apparatus.

The processor **402** also receives user input **422** and uses this input to perform various functions of the CSAS. The transceiver **414** is used by the processor **402** to transmit and receive information during a network conference. For example, the processor **402** uses the transceiver **414** to transmit and receive conference audio and video information **420.** The transceiver **414** also receives conference applications **422** that are installed as installed applications **412** as part of the CSAS. The transceiver **414** also transmits conference applications screen shots **424,** conference application content **426,** and conference application content attached to an instance of a conference **428.** In various exemplary embodiments, the processor **402** executes the CSAS client **112** to perform the conferencing functions and operations as shown in **FIG. 2****.**

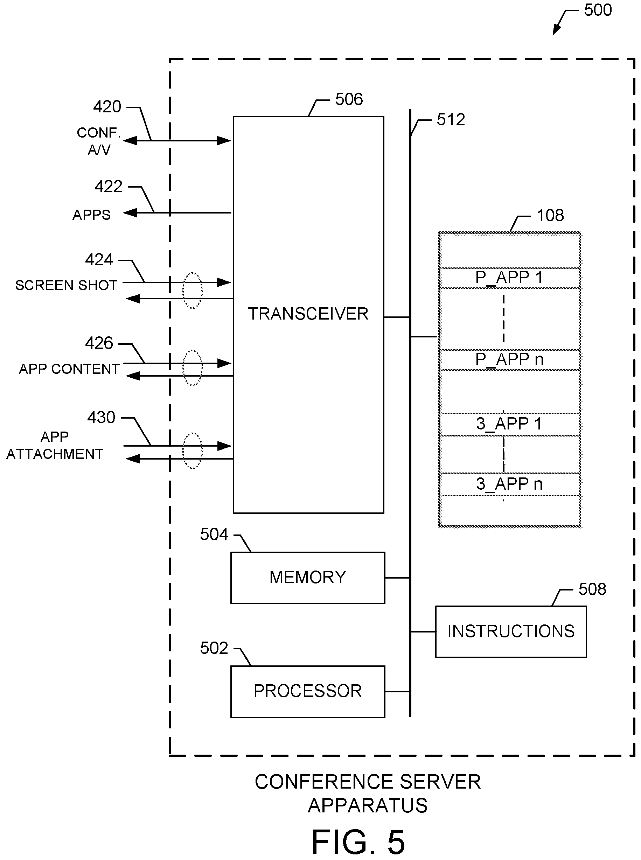

**FIG. 5** shows an exemplary conference server apparatus **500** configured to provide embodiments of the conference system with application support. For example, the server apparatus **500** is suitable for use as the server **104** shown in **FIG. 1****.** In an embodiment, the server **500** comprises processor **502,** memory **504,** transceiver **506,** instructions **508,** and conference application storage **108** all couple to communicate over bus **512.** The conference application storage **108** comprises a plurality of propriety and third-party conference applications can be downloaded and install in user equipment and use during network conferences. During operation, the processor **502** executes instructions **508** and utilizes the memory **504** as necessary to perform the functions of the server **500** as described herein.

During a network conference, the transceiver **506** communicates with the network **106** to exchange information between the conference host and attendees. For example, audio/video information **420** is exchanged between the conference participants. The transceiver **506** transmits conference applications **422** for installation on the systems of the conference attendees. When screen shot **424,** application content **426,** and application attachments **430** are received from the host UE, the transceiver **506** re-transmits that information to the designated conference attendees.

Therefore, in various exemplary embodiments, the server apparatus **500** is configured to store conference applications **108** and provide those applications to participants of a network conference in accordance with CSAS. The server **500** also facilitates the operation of network conference to provide all the features and functionality of CSAS.

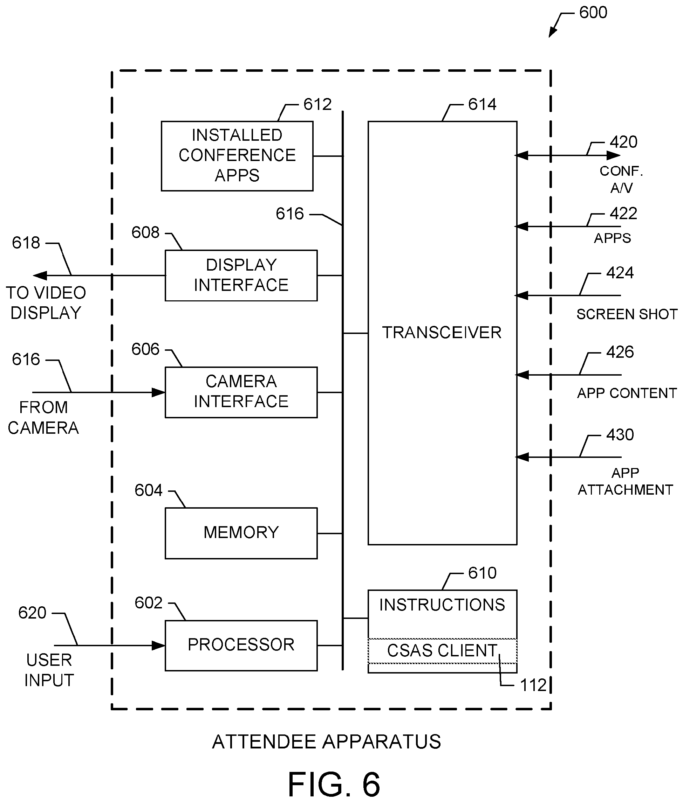

**FIG. 6** shows an exemplary attendee apparatus **600** configured to provide embodiments of the conference system with application support. For example, the attendee apparatus **600** is suitable for use as any of the attendee apparatus A1-A3 shown in **FIG. 1****.** The attendee apparatus **600** comprises processor **602,** memory **606,** camera interface **606,** display interface **608,** instructions **610,** installed conference applications **612,** and transceiver **614** all connected to communicate over data bus **616.** In an embodiment, the instructions **610** comprise the conference system with application support client **112.**

During operation, the processor **602** executes the instructions **610** to enable the client **112** to perform the functions and operations of the CSAS. For example, the processor **602** controls the camera interface **606** to receive a video signal **618** from a camera mounted at the user equipment. The video signal contains an image of the attendee user. The display interface **608** is configured to output display information **620** to a video display that is part of the attendee apparatus.

The processor **602** also receives user input **622** and uses this input to perform various functions of the CSAS. The transceiver **616** is used by the processor **602** to transmit and receive information during a network conference. For example, the processor **602** uses the transceiver **616** to transmit and receive conference audio and video information **420.** The transceiver **616** also receives conference applications **422** that are installed as installed conference application **612** as part of the CSAS. The transceiver **616** also receives conference applications screen shots **424,** conference application content **426,** and conference application content attached to an instance of a conference **430.** In various exemplary embodiments, the processor **602** executes the CSAS client **112** to perform the conferencing functions and operations as shown in **FIG. 2****.**

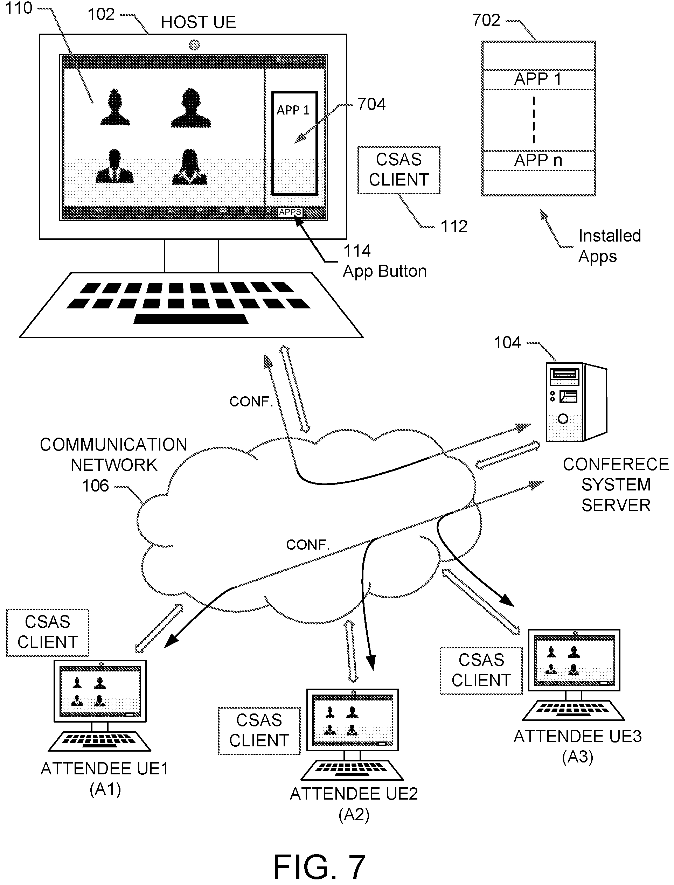

**FIG. 7** shows a diagram illustrating an exemplary embodiment of a conference system with application support in which a client application **112** is run on a host equipment **102** during a network conference. The client application **112** is also running on attendee computers A1-A3. The network server **104** facilitates the network conference over the communication network **106.** For example, the client application **112** provides a network conference display **110** on the host system and the attendee systems during the network conference.

During the conference, the user of the host system **102** selects the conference application selector (button) **114** to view a listing **702** of installed conference applications. The user selects one or more of the conference applications to run during the conference. For example, the user select conference application 1 **704** to run during the conference. The application 1 **704** runs in a side panel on the right side of the conference display **110.** During the conference the user can interact with the application **704** to take notes or make other entries depending on the functionality of the application. In an embodiment, the following functions are performed by embodiments of the CSAS.
1. Application selector button provided on menu to display directory of installed conference applications. Ability to install additional conference applications from application store on network server.
2. Selection of one or more conference applications to run during a network conference.
3. Run conference applications in sidebar during network conference.
4. Allow multiple conference applications to be installed and run at the same time (multitasking).
5. Allow resizing and repositioning of conference application dialog windows.

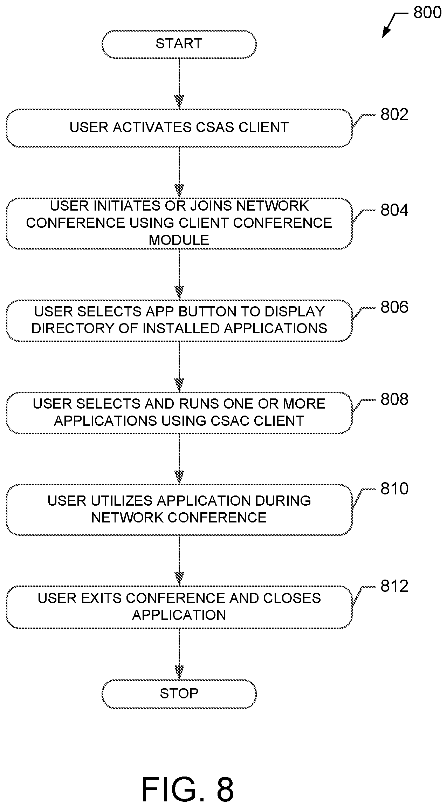

**FIG. 8** shows an exemplary method for running a conference application during a network conference. For example, in an embodiment, the method **800** is performed by the client application **112** running on the host **102** any of the attendee UE (A1-A3) systems shown in **FIG. 7****.**

At block **802,** a user activates the CSAS client on the device or system. For example, the user of the host **102** activates the CSAS client **112.**

At block **804,** the user initiates or joins a network conference using the CSAS client. For example, the user of the host **102** joins a conference with the attendees (A1-A3) utilizing the network server **104** and the network **106.**

At block **806,** the user selects the application button to display a directory listing of installed applications. For example, the user of the host **102** selects the application button **114** to see the listing **702** of conference applications installed on the host **102.**

At block **808,** the user selects and runs one or more of the application shown in the directory listing. For example, the user of the host **102** selects and runs the application **704** using the CSAS client, which provides an application dialog window in a right sidebar of the display **110.**

At block **810,** the user of the host **102** utilizes the application during the network conference with the attendees (A1-A3). For example, the conference application **704** provides any desired functionality, such as word processing, spreadsheets, presentations, or any other type of functionality suitable for an application.

At block **812,** the user exits the client conference and closes the application.

Thus, the method **800** provides a method running a conference application during a network conference. It should be noted that the operations of the method **800** are exemplary and not limiting of the scope of the embodiments. Furthermore the operations of the method **800** can be changed, deleted, rearranged, added to, or otherwise modified within the scope of the embodiments.

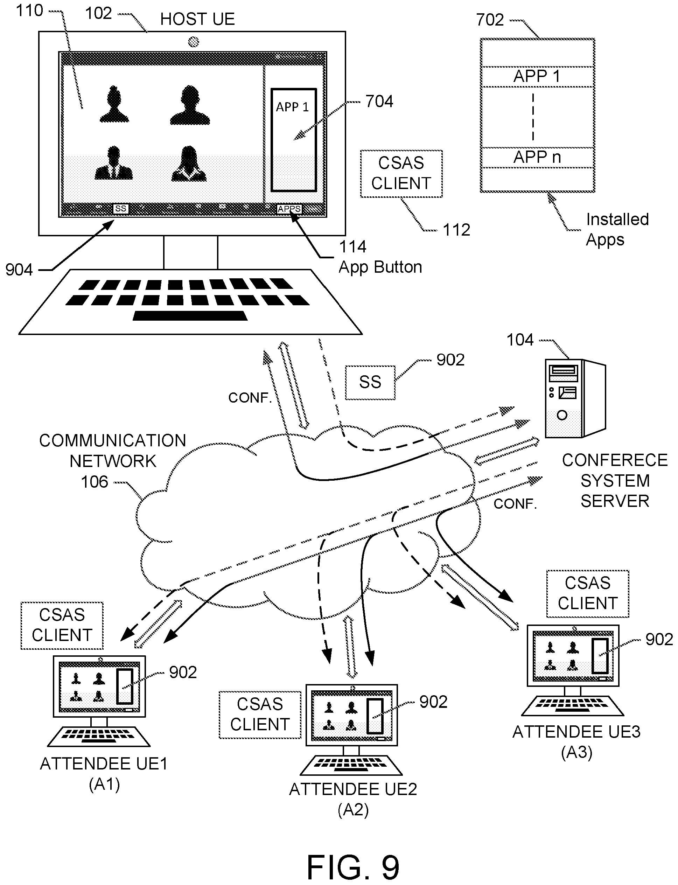

**FIG. 9** a diagram illustrating an exemplary embodiment of a conference system with application support in which an application screen shot is shared during a network conference. In an exemplary embodiment, the client application **112** is run on a host equipment **102** during a network conference. The client application **112** is also running on attendee computers A1-A3. The network server **104** facilitates the network conference over the communication network **106.** For example, the client application **112** provides a network conference display **110** on the host system and the attendee systems during the network conference.

During the conference, the user of the host system **102** selects the conference application selector **114** to view a listing **702** of installed conference applications. The user selects one or more of the conference applications to run during the conference. For example, the user select conference application 1 **704** to run during the conference. The application 1 **704** runs in a sidebar on the right side of the conference display **110.** During the conference the user can interact with the application **704** to take notes or make other entries depending on the functionality of the application. In an embodiment, the user selects a button **904** to generate a screen shot (SS) **902** of a display window generated by the application **704.** The SS **902** is transmitted to the attendees (A1-A3) through the server **104** and the network **106.** The SS **902** then appears on the displays of the attendee's systems. Thus, the user of the host **102** can transmit screen shots of conference applications in use on the host to any or all of the attendee's systems. In an embodiment, the following functions are performed by embodiments of the CSAS.
1. Application selector button provided on menu to display directory of installed conference applications. Ability to install additional conference applications from application store on network server.
2. Selection of one or more conference applications to run during a network conference.
3. Run conference applications in sidebar during network conference.
4. Allow multiple conference applications to be installed and run at the same time (multitasking).
5. Allow resizing and repositioning of conference application dialog windows.
6. Activate selector **904** to transmit screen shot of a conference application window to one or more conference attendees.

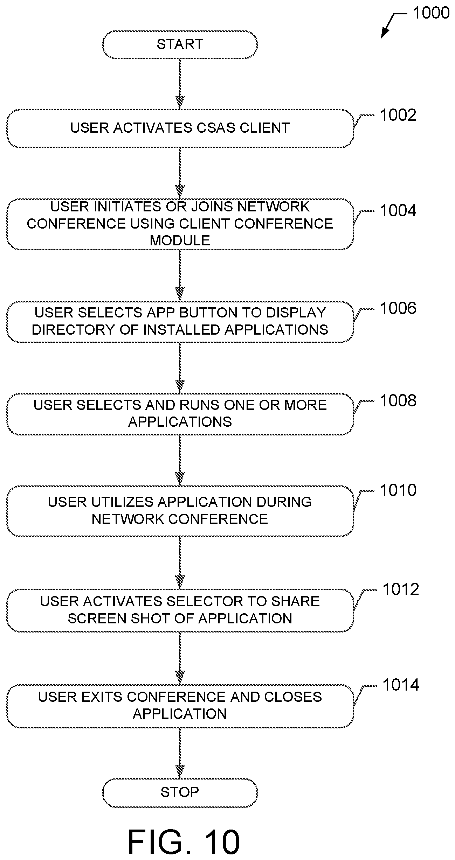

**FIG. 10** shows an exemplary method for sharing a screen shot of a conference application during a network conference. For example, in an embodiment, the method **1000** is performed by the client application **112** running on the host **102** any of the attendee UE (A1-A3) systems shown in **FIG. 9****.**

At block **1002,** a user activates the CSAS client on the device or system. For example, the user of the host **102** activates the CSAS client **112.**

At block **1004,** the user initiates or joins a network conference using the CSAS client. For example, the user of the host **102** joins a conference with the attendees (A1-A3) utilizing the network server **104** and the network **106.**

At block **1006,** the user selects the application button to display a directory listing of installed applications. For example, the user of the host **102** selects the application button **114** to see the listing **702** of conference applications installed on the host **102.**

At block **1008,** the user selects and runs one or more of the application shown in the directory listing. For example, the user of the host **102** selects and runs the application **704,** which provides an application dialog window in a right sidebar of the display **110.**

At block **1010,** the user of the host **102** utilizes the application during the network conference with the attendees (A1-A3). For example, the conference application **704** provides any desired functionality, such as word processing, spreadsheets, presentations, or any other type of functionality suitable for an application.

At block **1012,** the user of the host **102** activate the selector **904** to capture and transmit a screen shot of a conference application window to one or more conference attendees. For example, the client **112** captures the screen shot **902** of the application **704** and transmits the screen shot **902** to one or more of the attendee systems.

At block **1014,** the user exits the conference and closes the application.

Thus, the method **1000** provides a method for sharing a screen shot of a conference application during a network conference. It should be noted that the operations of the method **1000** are exemplary and not limiting of the scope of the embodiments. Furthermore the operations of the method **1000** can be changed, deleted, rearranged, added to, or otherwise modified within the scope of the embodiments.

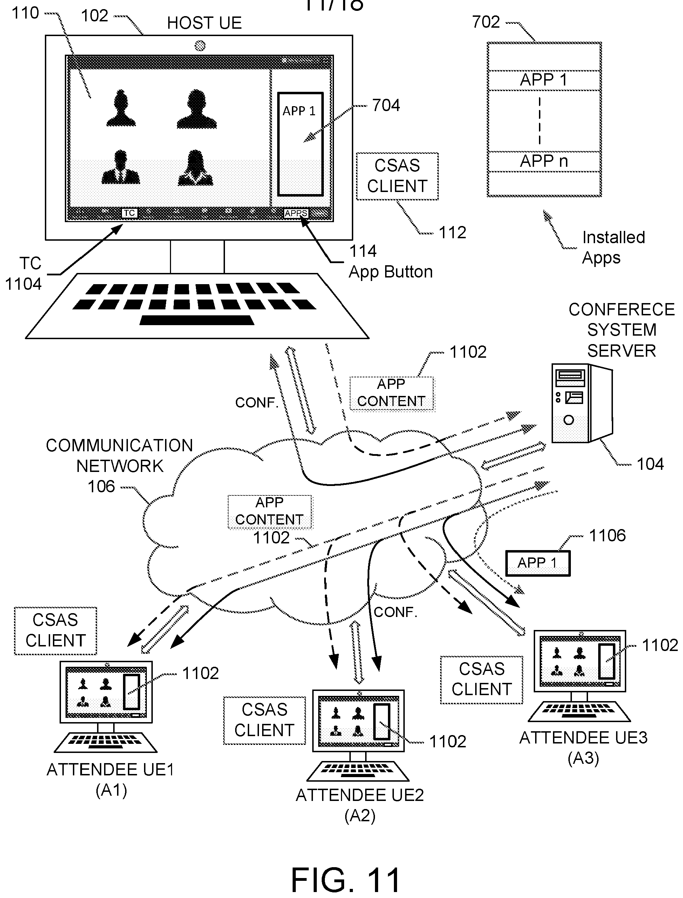

**FIG. 11** shows an exemplary method for transmitting application content during a network conference. In an exemplary embodiment, the client application **112** is run on a host equipment 102 during a network conference. The client application **112** is also running on attendee computers A1-A3. The network server **104** facilitates the network conference over the communication network **106.** For example, the client application **112** provides a network conference display **110** on the host system and the attendee systems during the network conference.

During the conference, the user of the host system **102** selects the conference application selector **114** to view a listing **702** of installed conference applications. The user selects one or more of the conference applications to run during the conference. For example, the user select conference application 1 **704** to run during the conference. The application 1 **704** runs in a side panel on the right sidebar of the conference display **110.** During the conference the user can interact with the application **704** to take notes or make other entries depending on the functionality of the application. In an embodiment, the user desired to transmit application content to one or more of the attendees. The user of the host **102** selects a "transmit content" (TC) button **1104** to transmit application content **1102** to the attendees for use on the attendee systems. The application content includes an application identifier that identifies the application with which the content is to be viewed. When the content is received at an attendee device, the CSAS client determines if the application corresponding to the application identifier is installed at the attendee. If the application is installed, the CSAS client runs that application and displays the content. If an attendee does not have the correct application installed, the CSAS client will automatically install the application from the server. For example, the attendee A3 does not have the application **704** installed. The CSAS client at the attendee A3 automatically installs the application 1 (as indicated at **1106**) from the server **104** and then displays the application content **1102** on the attendee A3 device. In an embodiment, the following functions are performed by embodiments of the CSAS.
1. Application selector button provided on menu to display directory of installed conference applications. Ability to install additional conference applications from application store on network server.
2. Selection of one or more conference applications to run during a network conference.
3. Run conference applications in sidebar during network conference.
4. Allow multiple conference applications to be installed and run at the same time (multitasking).
5. Allow resizing and repositioning of conference application dialog windows.
6. Activate selector TC selector **1104** to transmit application content from a conference application running on the host to one or more conference attendees. The transmitted application content includes an application identifier.
7. An attendee device receives that application content and the identifier. The CSAS client running on the attendee device runs the application corresponding to the application identifier and displays the content.
8. If the application corresponding to the application identifier is not installed on the attendee device, the CSAS client automatically downloads and installs the application **1106** from the server **104.** The CSAS client running on the attendee device runs the newly installed application corresponding to the application identifier and displays the content.

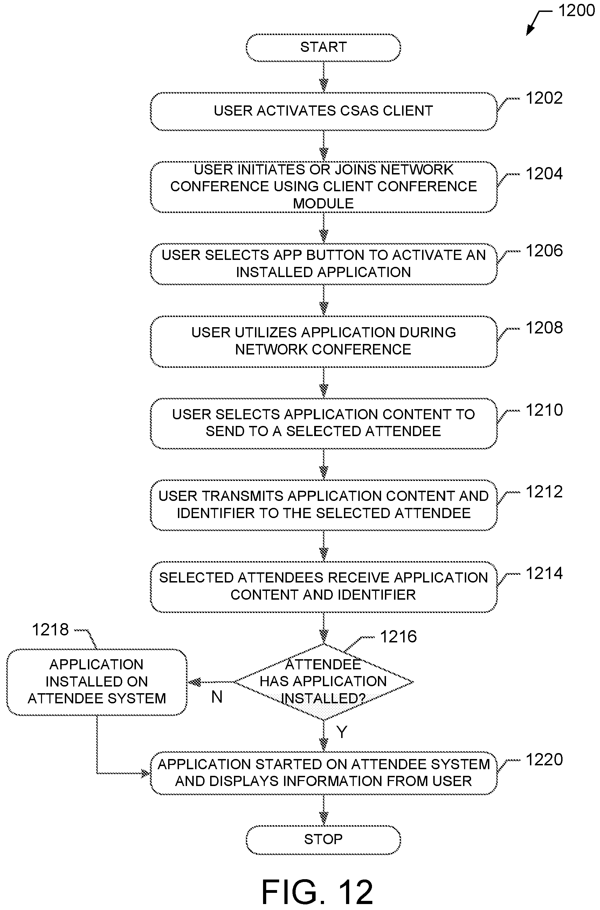

**FIG. 12** shows an exemplary method for transmitting application content during a network conference. For example, in an embodiment, the method **1200** is performed by the client application **112** running on the host **102** or any of the attendee UE (A1-A3) systems shown in **FIG. 11**.

At block **1202,** a user activates the CSAS client on the device or system. For example, the user of the host **102** activates the CSAS client **112.**

At block **1204,** the user initiates or joins a network conference using the CSAS client. For example, the user of the host **102** joins a conference with the attendees (A1-A3) utilizing the network server **124** and the network **126.**

At block **1206,** the user selects the application button to display a directory listing of installed applications. For example, the user of the host **102** selects the application button **114** to see the listing **702** of conference applications installed on the host **122.**

At block **1208,** the user selects and runs one or more of the application shown in the directory listing. For example, the user of the host **102** selects and runs the application **704,** which provides an application dialog window in a right sidebar of the display **112.**

At block **1210,** the user of the host **102** utilizes the application during the network conference with the attendees (A1-A3). The user identifies application to be transmitted to other attendees of the network conference. For example, the conference application **702** provides any desired functionality, such as word processing, spreadsheets, presentations, or any other type of functionality suitable for an application.

At block **1212**, the user transmits the application content and an application identifier to other attendees of the network conference. For example, the user of the host **102** selects the TC button **1104** to transmit the content and identifier **1106** to other network attendees.

At block **1214**, an attendee of the conference receives the transmitted content and the application identifier.

At block **1216**, a determination is made as to whether the receiving attendee has the correct application installed. For example, the CSAS client running at the attendee determines if the application identifier that was received matches any of the currently installed applications. If the application is installed, the method proceed to block **1220.** If the applicant is not installed the method proceeds to block **1218.**

At block **1218**, the application is installed on the attendee system. For example, the CSAS client automatically installs the application from the server **104.** For example, the CSAS client utilizes the received application identifier to install the correct application.

At block **1220**, the identified application is started on the attendee system and the received application content is displayed on the attendee system.

Thus, the method **1200** provides a method for transmitting application content during a network conference. It should be noted that the operations of the method **1200** are exemplary and not limiting of the scope of the embodiments. Furthermore the operations of the method **1200** can be changed, deleted, rearranged, added to, or otherwise modified within the scope of the embodiments.

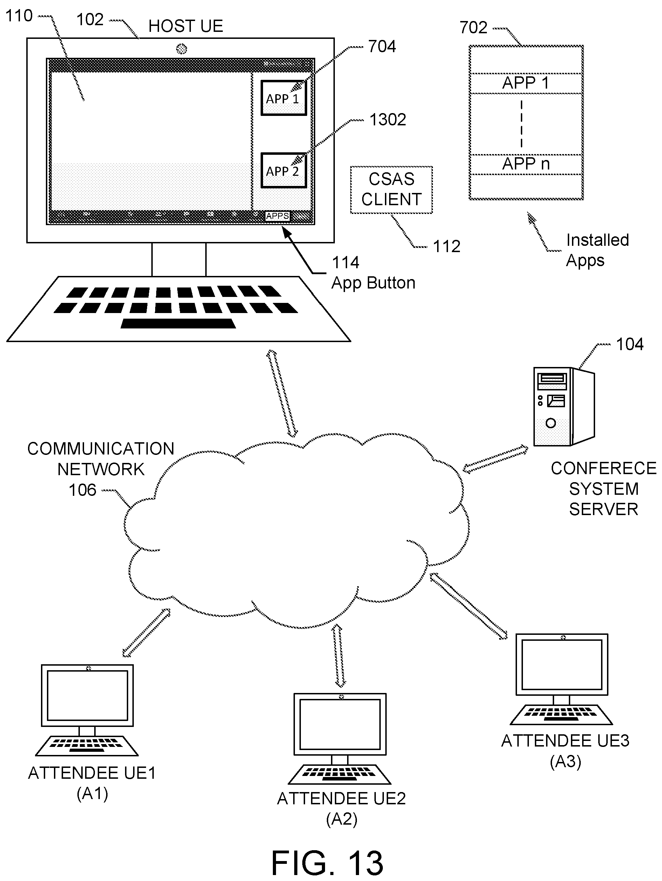

**FIG. 13** a diagram illustrating an exemplary embodiment of a conference system with application support in which applications are run before or after a network conference.

In an exemplary embodiment, the CSAS client application **112** is run on host equipment **102.** Prior to joining or initiating a network conference, the user of the host **102** selects the application button **114** to see the list installed applications **702.** The user of the host **102** selects the application **704** to run. The user interacts with the application **704** and can either close the application or leave the application running when joining a network conference.

The user of the host **102** can participate in a network conference and continue to utilize the application **704.** After the conference is completed, the user of the host **102** can select and run another application **1302.** After interacting with the applications **704** and **1302,** the user can close the applications. In an embodiment, the following functions are performed by embodiments of the CSAS client to utilize conference applications before or after a network conference.
1. A user activates the CSAS client but does not join a network conference.
2. The user selects a conference application to run. For example, the user selects one of the previously installed conference applications **702.**
3. The user interacts with the conference application as desired to perform some function of the application.
4. The user joins a network conference as described above.
5. During the conference the user continues to use the conference application.
6. The user leaves the network conference. The user may or may not close the conference application.
7. The user selects another conference application to run. For example, the user selects another one of the previously installed conference applications **1302.**

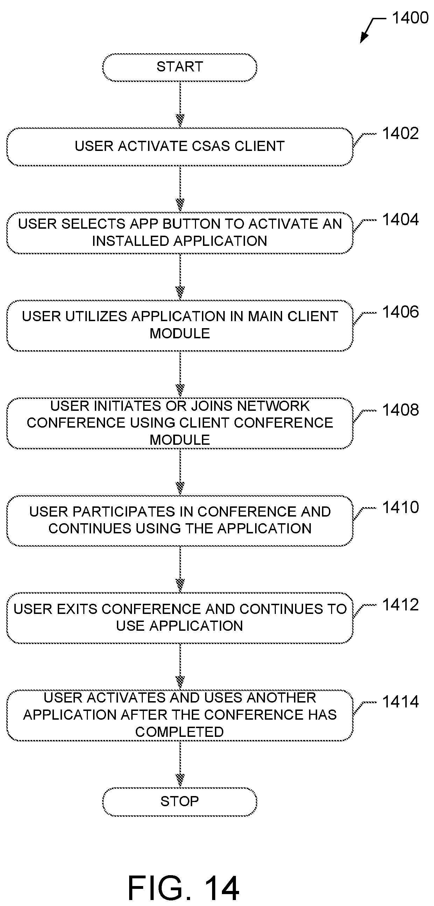

**FIG. 14** shows an exemplary method **1400** for running conference applications before or after a network conference. For example, in an embodiment, the method **1400** is performed by the client application **112** running on the host **102** or any of the attendee UE (A1-A3) systems shown in **FIG. 13****.**

At block **1402,** a user activates the CSAS client on the device or system. For example, the user of the host **102** activates the CSAS client **112.**

At block **1404,** the user selects the application button to display a directory listing of installed applications. For example, the user of the host **102** selects the application button **114** to see the listing **702** of conference applications installed on the host **142.**

At block **1406,** the user utilizes the application before joining a network conference.

At block **1408,** the user initiates or joins a network conference. For example, the user of the host **102** uses the CSAS client to initiates a network conference with the attendees A1-A3.

At block **1410,** the user participates in the network conference and continues to use the application **704.**

At block **1412,** the user exits the network conference and may or may not continue to use the application **704.** For example, the user may wish to close the application **704.**

At block **1414,** the user activates and user another conference application after the network conference has ended. For example, the user selects and runs the application **1302** after the network conference has ended.

Thus, the method **1400** provides a method for running conference applications before or after a network conference. It should be noted that the operations of the method **1400** are exemplary and not limiting of the scope of the embodiments. Furthermore the operations of the method **1400** can be changed, deleted, rearranged, added to, or otherwise modified within the scope of the embodiments.

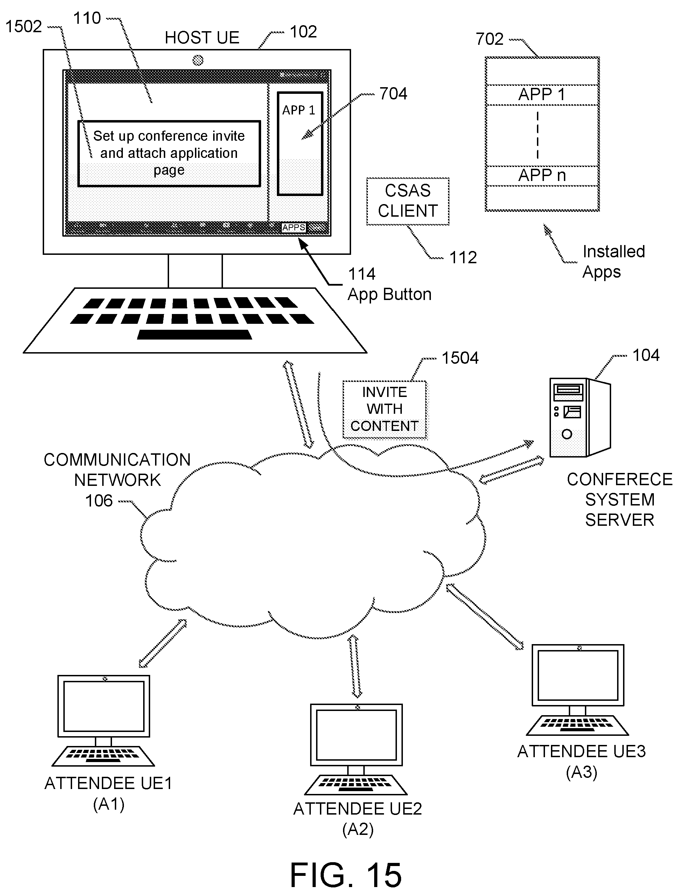

**FIG. 15** a diagram illustrating an exemplary embodiment of a conference system with application support in which application content is attached to an instance of a network conference.

In an exemplary embodiment, the CSAS client application **112** is run on host equipment **102.** Prior to initiating a network conference, the user of the host **102** selects the application button **114** to see the list installed applications **702.** The user of the host **102** selects the application **704** to run. The user interacts with the application **704** to generate application content. The user then selects to generate a conference invitation **1502** to invite attendees to a network conference. The user attaches application content to the invitation. The user transmits the invitation and content **1504** to the network server **104.** When the attendees receive the invention and content **1504,** the attendees can view the attached content prior to the conference.

In an embodiment, the following functions are performed by embodiments of the CSAS client to attached application content to an instance of a network conference.
1. A user activates the CSAS client.
2. The user selects a conference application to run. For example, the user selects one of the previously installed conference applications **702.**
3. The user interacts with the conference application as desired to perform some function of the application to generate application content.
4. The user generates a conference invitation and attached application content.
5. The user transmits the conference invitation and application content **1504** to the network server **104.**

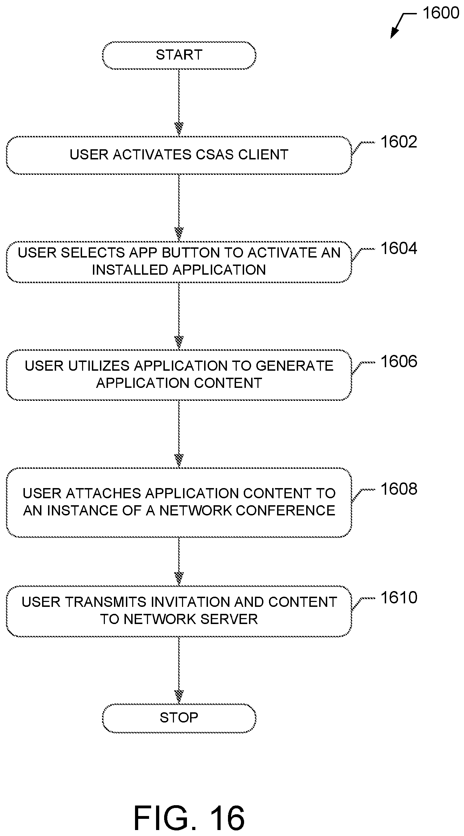

**FIG. 16** shows an exemplary method **1600** for attaching conference application content to an instance of a network conference. For example, in an embodiment, the method **1600** is performed by the client application **112** running on the host **102** or any of the attendee UE (A1-A3) systems shown in **FIG. 15****.**

At block **1602,** a user activates the CSAS client on the device or system. For example, the user of the host **102** activates the CSAS client **112.**

At block **1604,** the user selects the application button to display a directory listing of installed applications. For example, the user of the host **102** selects the application button **114** to see the listing **702** of conference applications installed on the host **102** and selects an application to run.

At block **1606,** the user utilizes the application to generate application content.

At block **1608,** the user attaches application content to an instance of a network conference. For example, the user of the host 102 uses the CSAS client to generate an invitation **1502** to a network conference with attached the application content.

At block **1610,** the CSAS client transmits invitation and content **1504** to the network server **104.**

Thus, the method **1600** provides a method for attaching conference application content to an instance of a network conference. It should be noted that the operations of the method **1600** are exemplary and not limiting of the scope of the embodiments. Furthermore the operations of the method **1600** can be changed, deleted, rearranged, added to, or otherwise modified within the scope of the embodiments.

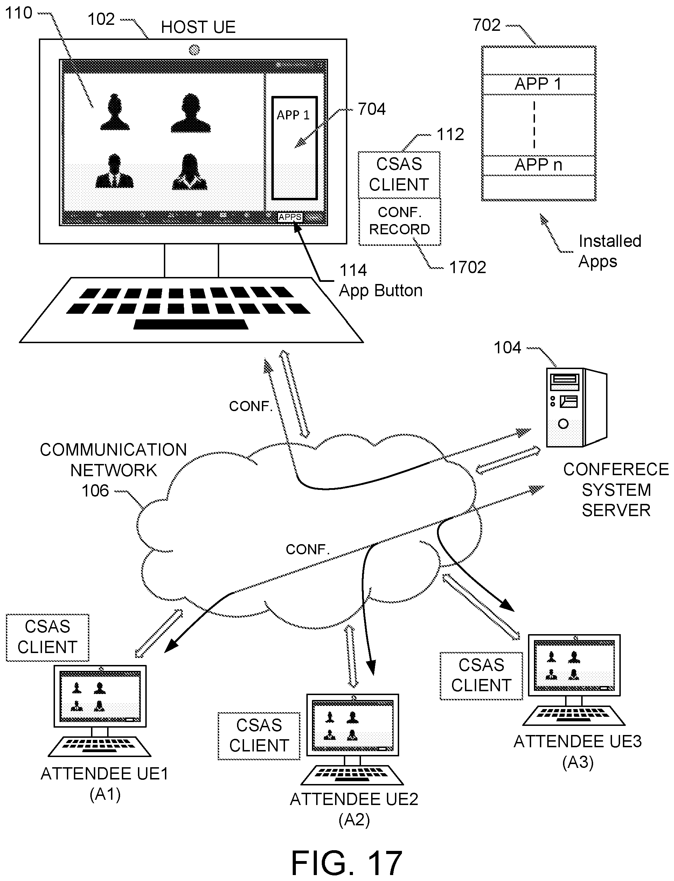

**FIG. 17** a diagram illustrating an exemplary embodiment of a conference system with application support in which a record of application usage during a network conference is maintained.

In an exemplary embodiment of a conference system with application support, the client application **112** is run on a host equipment **102** during a network conference. The client application **112** is also running on attendee computers A1-A3. The network server **104** facilitates the network conference over the communication network **106.** For example, the client application **112** provides a network conference display **110** on the host system and the attendee systems during the network conference.

During the conference, the user of the host system **102** selects the conference application selector (button) **114** to view a listing **702** of installed conference applications. The user selects one or more of the conference applications to run during the conference. For example, the user select conference application 1 **704** to run during the conference. The application 1 **704** runs in a side panel on the right side of the conference display **110.** During the conference the user can interact with the application **704** to take notes or make other entries depending on the functionality of the application. In an embodiment, the following functions to record the activities of the network conference are performed by embodiments of the CSAS.
1. A user activates the CSAS client and begin a conference recording 1702 to record events related to the user of the CSAS client and conference applications.
2. The user selects a conference application to run. For example, the user selects one of the previously installed conference applications **702.**
3. The user interacts with the conference application as desired to perform some function of the application to generate application content.
4. The user initiates or joins a network conference and utilizes one or more conference applications before, during, or after the conference. For example, the CSAS can perform any or all of the application functions as shown in FIG. 2.
5. The user exists the conference and closes all conference applications.
6. The CSAS completes the conference record **1702** and saves these events on the host system **102.**

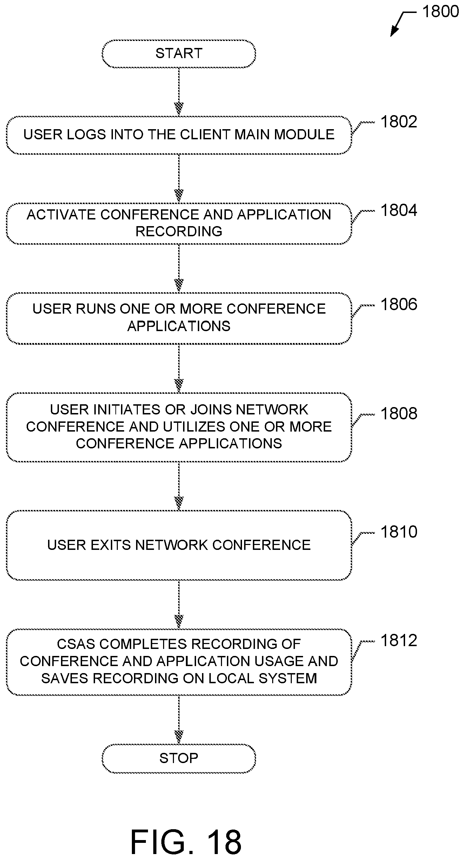

**FIG. 18** shows an exemplary method **1800** for maintaining a record of application usage during a network conference. For example, in an embodiment, the method **1800** is performed by the client application **112** running on the host **102** or any of the attendee UE (A1-A3) systems shown in **FIG. 17****.**

At block **1802,** a user activates the CSAS client on the device or system. For example, the user of the host **102** activates the CSAS client **112.**

At block **1804,** the user activates conference recording. For example, the CSAS client receives user input to activate conference recording to recording conference activity and application usage.

At block **1806,** the user runs one or more conference applications.

At block **1808,** the user or the host **102** initiates or joins a network conference. During the network conference the user interact with one or more conference applications. The user may also provide input to the CSAS client to perform any or all of the functions shown in **FIG. 2****.**

At block **1810,** the user exits the network conference. For example, the user provides user input to the CSAS client to exit the network conference.

At block **1812,** the CSAS completes recording of conference and application usage and saves recording on the local system. For example, the CSAS saves the conference recording **1702** on the host **102.**

Thus, the method **1800** provides a method for operating a UE of a conference attendee to utilize a scene layout during a network conference. It should be noted that the operations of the method **1800** are exemplary and not limiting of the scope of the embodiments. Furthermore the operations of the method **1800** can be changed, deleted, rearranged, added to, or otherwise modified within the scope of the embodiments.

In an embodiment, the exemplary embodiments described herein are implemented using customized hard-wired logic, one or more ASICs or FPGAs, firmware and/or program logic which in combination with a computer system causes or programs the disclosed apparatus to be a special-purpose machine. According to one embodiment, the operations described herein are performed by a processor or computer executing one or more sequences of one or more instructions contained in memory. Such instructions may be read into memory from another storage medium. Execution of the sequences of instructions contained in memory causes a processor to perform the process steps described herein. In alternative embodiments, hard-wired circuitry may be used in place of or in combination with software instructions.

The term "storage media" as used herein refers to any non-transitory medium that stores data and/or instructions that cause a machine to operate in a specific fashion. Such storage media may comprise non-volatile media and/or volatile media. Non-volatile media includes, for example, optical or magnetic disks, such as memory **404** or instructions memory **412.** Volatile media includes dynamic memory. Common forms of storage media include, for example, a floppy disk, a flexible disk, a hard disk, a solid state drive, a magnetic tape, or any other magnetic data storage medium, a CD-ROM, any other optical data storage medium, any physical medium with patterns of holes, a RAM, a PROM, and an EPROM, a FLASH-EPROM, an NVRAM, any other memory chip or cartridge.

Storage media is distinct from but may be used in conjunction with transmission media. Transmission media participates in transferring information between storage media. For example, transmission media includes coaxial cables, copper wire, and fiber optics, including the wires that comprise one or more buses. Transmission media can also take the form of acoustic or light waves, such as those generated during radio-wave and infra-red data communications.

Various forms of media may be involved in carrying one or more sequences of one or more instructions to a disclosed processor for execution. For example, the instructions may initially be carried on a magnetic disk or a solid-state drive of a remote computer. The remote computer can load the instructions into its dynamic memory and send the instructions over a telephone line using a modem. A local modem can receive the data on the telephone line and use an infra-red transmitter to convert the data to an infra-red signal. An infra-red detector can receive the data carried in the infra-red signal and appropriate circuitry can place the data on a data bus, which carries the data to a memory, from which a processor retrieves and executes the instructions. The instructions may optionally be stored on a storage device either before or after execution by processor.

The exemplary embodiment of the present invention includes various processing steps described herein. The steps of the embodiment may be embodied in machine or computer executable instructions. The instructions can be used to cause a general purpose or special purpose system, which is programmed with the instructions, to perform the steps of the exemplary embodiment of the present invention. Alternatively, the steps of the exemplary embodiment of the present invention may be performed by specific hardware components that contain hard-wired logic for performing the steps, or by any combination of programmed computer components and custom hardware components.

While particular embodiments of the present invention have been shown and described, it will be obvious to those of ordinary skills in the art that based upon the teachings herein, changes and modifications may be made within the scope of the claims. Therefore, the appended claims are intended to encompass within their scope all such changes and modifications.

## Claims

1. A method, performed by an apparatus (102) running a Conference System with Application Support (CSAS) client (112) for providing a conference application (116) during a network conference, the network conference being for a plurality of conference participants, the method comprising:
participating (804) in the network conference using the CSAS client (112);
selecting (808) a conference application (116) from a plurality of conference applications (108), wherein each conference application (116) is adapted to provide functions to the conference participants during the network conference;
running (808, 810) the conference application (116) from the CSAS client (112) during the network conference; and
displaying an application user interface generated by the conference application during the network conference.

2. The method of claim 1, wherein the operation of selecting (808) comprises selecting the conference application from a plurality of installed conference applications.

3. The method of claim 2, further comprising installing the plurality of installed conference applications from a network server.

4. The method of claim 1, wherein the operation of selecting (808) comprises:
selecting an application selector (114) to view a list of the plurality of conference applications (108); and
selecting the conference application (116) from the list.

5. The method of claim 1, wherein the conference application is configured as a web application that can be executed by a web browser and wherein the CSAS client (112)includes a version of a web browser and the operation of running comprises running the CSAS client as a web application using the version of the web browser.

6. The method of claim 1, wherein the operation of selecting (808) comprises selecting more than one conference application and the operation of running comprises running the more than one conference application to display more than one application user interface, respectively.

7. The method of claim 1, wherein the operation of displaying comprises performing at least one of relocating and resizing the application user interface.

8. An apparatus (102) running a Conference System with Application Support (CSAS) client (112) for providing a conference application during a network conference, the network conference being for a plurality of conference participants, the apparatus comprising:
a processor configured to:
run the CSAS client (112)to participate in the network conference;
select a conference application (116) from a plurality of conference applications (108), wherein each conference application (116) is adapted to provide functions to the conference participants during the network conference; and
run the conference application (116) from the CSAS client (112) during the network conference; and
a display interface (110) configured to display an application user interface generated by the conference application during the network conference.

9. The apparatus of claim 8, wherein the processor receives user input to select the conference application (116) from a plurality of installed conference applications (108).

10. The apparatus of claim 8, wherein the processor is further configured to install the plurality of installed conference applications (108) from a network server.

11. The apparatus of claim 8, wherein the processor receives an application selector (114) as user input and in response displays a list of the plurality of conference applications (108), and wherein the processor receives additional user input to select the conference application from the list.

12. The apparatus of claim 8, wherein the conference application is configured as a web application that can be executed by a web browser and wherein the CSAS client (112) includes a version of a web browser and the processor runs the version of the web browser to run the CSAS client (112) as a web application.

13. The apparatus of claim 8, wherein the processor selects more than one conference application (116) and runs the more than one conference application to display more than one application user interface, respectively.

14. A non-transitory computer readable medium on which are stored program instructions that, when executed by one or more processors, cause the one or more processors to perform operations of:
participating (804) in a network conference using a Conference System with Application Support (CSAS) client (112), the network conference being for a plurality of conference participants;
selecting (808) a conference application (116) from a plurality of conference applications (108), wherein each conference application (116) is adapted to provide functions to the conference participants during the network conference;
running the conference application (116) from the CSAS client (112) during the network conference; and
displaying an application user interface generated by the conference application during the network conference.

15. The non-transitory computer readable medium of claim 14, wherein the program instructions cause the one or more processors to select the conference application (116) from a plurality of installed conference applications.

## Patentansprüche

1. Verfahren, ausgeführt durch eine Vorrichtung (102), die einen Client (112) eines Konferenzsystems mit Anwendungskoppelung (CSAS) zum Bereitstellen einer Konferenzanwendung (116) während einer Netzwerkkonferenz ausführt, wobei die Netzwerkkonferenz für eine Vielzahl von Konferenzteilnehmern bestimmt ist, das Verfahren umfassend:
Teilnehmen (804) an der Netzwerkkonferenz unter Verwendung des CSAS-Clients (112);
Auswählen (808) einer Konferenzanwendung (116) aus einer Vielzahl von Konferenzanwendungen (108), wobei jede Konferenzanwendung (116) angepasst ist, um den Konferenzteilnehmern während der Netzwerkkonferenz Funktionen bereitzustellen;
Ausführen (808, 810) der Konferenzanwendung (116) über den CSAS-Client (112) während der Netzwerkkonferenz; und
Anzeigen einer durch die Konferenzanwendung generierten Anwendungsbutzeroberfläche während der Netzwerkkonferenz.

2. Verfahren nach Anspruch 1, wobei der Vorgang des Auswählens (808) das Auswählen der Konferenzanwendung aus einer Vielzahl von installierten Konferenzanwendungen umfasst.

3. Verfahren nach Anspruch 2, ferner umfassend das Installieren der Vielzahl von installierten Konferenzanwendungen von einem Netzwerkserver.

4. Verfahren nach Anspruch 1, wobei der Vorgang des Auswählens (808) Folgendes umfasst:
Auswählen einer Anwendungsauswahleinheit (114), um eine Liste der Vielzahl von Konferenzanwendungen (108) anzuzeigen; und
Auswählen der Konferenzanwendung (116) aus der Liste.

5. Verfahren nach Anspruch 1, wobei die Konferenzanwendung als Webanwendung konfiguriert ist, die durch einen Webbrowser ausgeführt werden kann, und wobei der CSAS-Client (112) eine Version eines Webbrowsers einschließt und der Vorgang des Ausführens das Ausführen des CSAS-Clients als Webanwendung unter Verwendung der Version des Webbrowsers umfasst.

6. Verfahren nach Anspruch 1, wobei der Vorgang des Auswählens (808) das Auswählen von mehr als einer Konferenzanwendung umfasst und der Vorgang des Ausführens das Ausführen der mehr als einen Konferenzanwendung umfasst, um jeweils mehr als eine Anwendungsbenutzeroberfläche anzuzeigen.

7. Verfahren nach Anspruch 1, wobei die Operation des Anzeigens das Durchführen von mindestens einem aus einem Neupositionieren und einer Größenänderung der Anwendungsbenutzeroberfläche umfasst.

8. Vorrichtung (102), die einen Client (112) eines Konferenzsystems mit Anwendungskoppelung (CSAS) zum Bereitstellen einer Konferenzanwendung während einer Netzwerkkonferenz ausführt, wobei die Netzwerkkonferenz für eine Vielzahl von Konferenzteilnehmern bestimmt ist, die Vorrichtung umfassend:
einen Prozessor, der konfiguriert ist zum:
Ausführen des CSAS-Clients (112), um an der Netzwerkkonferenz teilzunehmen;
Auswählen einer Konferenzanwendung (116) aus einer Vielzahl von Konferenzanwendungen (108), wobei jede Konferenzanwendung (116) angepasst ist, um den Konferenzteilnehmern während der Netzwerkkonferenz Funktionen bereitzustellen; und
Ausführen der Konferenzanwendung (116) über den CSAS-Client (112) während der Netzwerkkonferenz; und
eine Anzeigeschnittstelle (110), die konfiguriert ist, um eine durch die Konferenzanwendung generierte Anwendungsbenutzeroberfläche während der Netzwerkkonferenz anzuzeigen.

9. Vorrichtung nach Anspruch 8, wobei der Prozessor eine Benutzereingabe empfängt, um die Konferenzanwendung (116) aus einer Vielzahl von installierten Konferenzanwendungen (108) auszuwählen.

10. Vorrichtung nach Anspruch 8, wobei der Prozessor ferner konfiguriert ist, um die Vielzahl von installierten Konferenzanwendungen (108) von einem Netzwerkserver zu installieren.

11. Vorrichtung nach Anspruch 8, wobei der Prozessor eine Anwendungsauswahleinheit (114) als Benutzereingabe empfängt und als Reaktion darauf eine Liste der Vielzahl von Konferenzanwendungen (108) anzeigt, und wobei der Prozessor eine zusätzliche Benutzereingabe empfängt, um die Konferenzanwendung aus der Liste auszuwählen.

12. Vorrichtung nach Anspruch 8, wobei die Konferenzanwendung als eine Webanwendung konfiguriert ist, die durch einen Webbrowser ausgeführt werden kann, und wobei der CSAS-Client (112) eine Version eines Webbrowsers einschließt und der Prozessor die Version des Webbrowsers ausführt, um den CSAS-Client (112) als eine Webanwendung auszuführen.

13. Vorrichtung nach Anspruch 8, wobei der Prozessor mehr als eine Konferenzanwendung (116) auswählt und die mehr als eine Konferenzanwendung ausführt, um jeweils mehr als eine Anwendungsbenutzeroberfläche anzuzeigen.

14. Nichtflüchtiges computerlesbares Medium, auf dem Programmanweisungen gespeichert sind, die bei Ausführung durch einen oder mehrere Prozessoren bewirken, dass der eine oder die mehreren Prozessoren folgende Operationen ausführen:
Teilnehmen (804) an einer Netzwerkkonferenz unter Verwendung eines Clients (112) eines Konferenzsystems mit Anwendungskoppelung (CSAS), wobei die Netzwerkkonferenz für eine Vielzahl von Konferenzteilnehmern bestimmt ist;
Auswählen (808) einer Konferenzanwendung (116) aus einer Vielzahl von Konferenzanwendungen (108), wobei jede Konferenzanwendung (116) angepasst ist, um den Konferenzteilnehmern während der Netzwerkkonferenz Funktionen bereitzustellen;
Ausführen der Konferenzanwendung (116) über den CSAS-Client (112) während der Netzwerkkonferenz; und
Anzeigen einer durch die Konferenzanwendung generierten Anwendungsbutzeroberfläche während der Netzwerkkonferenz.

15. Nichtflüchtiges computerlesbares Medium nach Anspruch 14, wobei die Programmanweisungen den einen oder die mehreren Prozessoren veranlassen, die Konferenzanwendung (116) aus einer Vielzahl von installierten Konferenzanwendungen auszuwählen.

## Revendications

1. Procédé, réalisé par un appareil (102) exécutant un client de système de conférence avec prise en charge d'applications (CSAS, Conference System with Application Support) (112) permettant de fournir une application de conférence (116) pendant une conférence réseau, la conférence réseau étant destinée à une pluralité de participants à la conférence, le procédé comprenant :
la participation (804) à la conférence réseau à l'aide du client CSAS (112) ;
la sélection (808) d'une application de conférence (116) parmi une pluralité d'applications de conférence (108), dans lequel chaque application de conférence (116) est adaptée pour fournir des fonctions aux participants à la conférence pendant la conférence réseau ;
l'exécution (808, 810) de l'application de conférence (116) à partir du client CSAS (112) pendant la conférence réseau ; et
l'affichage d'une interface utilisateur d'application générée par l'application de conférence pendant la conférence réseau.

2. Procédé selon la revendication 1, dans lequel l'opération de sélection (808) comprend la sélection de l'application de conférence parmi une pluralité d'applications de conférence installées.

3. Procédé selon la revendication 2, comprenant en outre l'installation de la pluralité d'applications de conférence à partir d'un serveur réseau.

4. Procédé selon la revendication 1, dans lequel l'opération de sélection (808) comprend :
la sélection d'un sélecteur d'application (114) pour afficher une liste de la pluralité d'applications de conférence (108) ; et
la sélection de l'application de conférence (116) à partir de la liste.

5. Procédé selon la revendication 1, dans lequel l'application de conférence est configurée en tant qu'application web qui peut être exécutée par un navigateur web et dans lequel le client CSAS (112) comporte une version d'un navigateur web, et l'opération d'exécution comprend l'exécution du client CSAS en tant qu'application web à l'aide de la version du navigateur web.

6. Procédé selon la revendication 1, dans lequel l'opération de sélection (808) comprend la sélection de plus d'une application de conférence et l'opération d'exécution comprend l'exécution de ladite plus d'une application de conférence pour afficher plus d'une interface utilisateur d'application, respectivement.

7. Procédé selon la revendication 1, dans lequel l'opération d'affichage comprend la réalisation d'au moins l'une parmi la relocalisation et le redimensionnement de l'interface utilisateur d'application.

8. Appareil (102) exécutant un client de système de conférence avec prise en charge d'applications (CSAS, Conference System with Application Support) (112) permettant de fournir une application de conférence pendant une conférence réseau, la conférence réseau étant destinée à une pluralité de participants à la conférence, l'appareil comprenant :
un processeur configuré pour :
exécuter le client CSAS (112) pour participer à la conférence réseau ;
sélectionner une application de conférence (116) parmi une pluralité d'applications de conférence (108), dans lequel chaque application de conférence (116) est adaptée pour fournir des fonctions aux participants à la conférence pendant la conférence réseau ; et
exécuter l'application de conférence (116) à partir du client CSAS (112) pendant la conférence réseau ; et
une interface d'affichage (110) configurée pour afficher une interface utilisateur d'application générée par l'application de conférence pendant la conférence réseau.

9. Appareil selon la revendication 8, dans lequel le processeur reçoit une entrée utilisateur pour sélectionner l'application de conférence (116) parmi une pluralité d'applications de conférence installées (108).

10. Appareil selon la revendication 8, dans lequel le processeur est en outre configuré pour installer la pluralité d'applications de conférence (108) à partir d'un serveur réseau.

11. Appareil selon la revendication 8, dans lequel le processeur reçoit un sélecteur d'application (114) en tant qu'entrée utilisateur et en réponse affiche une liste de la pluralité d'applications de conférence (108), et dans lequel le processeur reçoit une entrée utilisateur supplémentaire pour sélectionner l'application de conférence à partir de la liste.

12. Appareil selon la revendication 8, dans lequel l'application de conférence est configurée en tant qu'application web qui peut être exécutée par un navigateur web et dans lequel le client CSAS (112) comporte une version d'un navigateur web, et le processeur exécute la version du navigateur web pour exécuter le client CSAS (112) en tant qu'application web.

13. Appareil selon la revendication 8, dans lequel le processeur sélectionne plus d'une application de conférence (116) et exécute ladite plus d'une application de conférence pour afficher plus d'une interface utilisateur d'application, respectivement.

14. Support lisible par ordinateur non transitoire sur lequel sont stockées des instructions de programme qui, lorsqu'elles sont exécutées par un ou plusieurs processeurs, amènent ledit ou lesdits processeurs à réaliser les opérations suivantes :
la participation (804) à une conférence réseau à l'aide d'un client de système de conférence avec prise en charge d'applications (CSAS, Conference System with Application Support) (112), la conférence réseau étant destinée à une pluralité de participants à la conférence ;
la sélection (808) d'une application de conférence (116) parmi une pluralité d'applications de conférence (108), dans lequel chaque application de conférence (116) est adaptée pour fournir des fonctions aux participants à la conférence pendant la conférence réseau ;
l'exécution de l'application de conférence (116) à partir du client CSAS (112) pendant la conférence réseau ; et
l'affichage d'une interface utilisateur d'application générée par l'application de conférence pendant la conférence réseau.

15. Support lisible par ordinateur non transitoire selon la revendication 14, dans lequel les instructions de programme amènent ledit ou lesdits processeurs à sélectionner l'application de conférence (116) parmi une pluralité d'applications de conférence installées.
